**Europäisches Patentamt**

(19) **European Patent Office**

**Office européen des brevets**

(11) Veröffentlichungsnummer: **0 024 633**
**B1**

(12) ## EUROPÄISCHE PATENTSCHRIFT

(45) Veröffentlichungstag der Patentschrift:
**13.02.85**

(51) Int. Cl.⁴: **H 01 M 10/34**

(21) Anmeldenummer: **80104780.4**

(22) Anmeldetag: **13.08.80**

(54) **Gasungsfreier Akkumulator.**

(30) Priorität: **01.09.79 DE 2935363**

(43) Veröffentlichungstag der Anmeldung:
**11.03.81 Patentblatt 81/10**

(45) Bekanntmachung des Hinweises auf die Patenterteilung:
**13.02.85 Patentblatt 85/7**

(84) Benannte Vertragsstaaten:
**AT BE CH DE FR GB IT LI NL SE**

(56) Entgegenhaltungen:
**DE - A - 1 279 154**
**FR - A - 1 006 583**
**FR - A - 1 016 547**
**FR - A - 1 096 062**
**FR - A - 1 246 427**
**US - A - 2 971 999**
**US - A - 3 730 772**
**US - A - 3 855 002**
**US - A - 4 053 695**
**US - A - 4 131 723**
**US - A - 4 137 377**

(73) Patentinhaber: **ROBERT BOSCH GMBH, Postfach 50,**
**D-7000 Stuttgart 1 (DE)**

(72) Erfinder: **Häbich, Andreas, Dipl.-Chem. Dr.,**
**Blumenstrasse 65, D-7016 Gerlingen (DE)**
Erfinder: **Arnold, Josef, Bannwaldweg 8,**
**D-7016 Gerlingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

### Stand der Technik

Die Erfindung geht aus von einem gasungsfreien Akkumulator nach der Gattung des Hauptanspruchs. Wegen des begrenzten Wirkungsgrades der Ladungsaufnahme von Batterieelektroden wird der Ladevorgang stets von Nebenreaktionen begleitet, deren wichtigste die mit einer Gasung verbundene Wasserzersetzung ist. Der von Plus- und Minusplatten unterschiedliche Ladewirkungsgrad hat dabei zur Folge, daß schon sehr frühzeitig Sauerstoff entsteht, Wasserstoff aber vornehmlich erst gegen Ladungsende freigesetzt wird. Dieser Sauerstoff kann nun nicht nur an feuchten, nicht vom Elektrolyten bedeckten Minusplatten reduziert werden, sondern die Umsetzung läuft besser und gleichmäßiger an Minusplatten ab, die in flüssigen Elektrolyten eintauchen. Diese Tatsache und das besondere Ladeverhalten der Batterieelektroden ermöglichen, insbesondere bei Bleibatterien mit antimonfreien und antimonarmen Gittern, unabhängig davon, ob der Elektrolyt flüssig oder festgelegt ist, eine Umsetzung des Sauerstoffs an den Minuselektroden, ohne die Batterie dazu gasdicht verschließen zu müssen, wodurch Wasserverlust und Gasung vermieden werden. Auf dieser Basis ist es aus der OE-PS 259 654 bekannt, den im Gasraum des Akkumulators angesammelten Sauerstoff mittels einer Pumpe an das untere Ende der Minusplatten zu führen, so daß der Sauerstoff von daher im Elektrolyten aufsteigt und im Kontakt mit den Minusplatten reduziert und zu Wasser umgesetzt wird. Durch die Notwendigkeit des Vorsehens einer Pumpanordnung im Gasraum des Akkumulators ist dieser Sammler jedoch sehr aufwendig, darüber hinaus wird die Bauhöhe der Batterie größer, was gerade bei Starterbatterien, für deren Einbau immer weniger Platz zur Verfügung steht, nachteilig ist.

Die FR-A-1 006 583 beschreibt einen gasdichten Akkumulator, dessen Separator aus einem Material besteht, das den Elektrolyten beispielsweise durch Kapillarität festhält und der Löcher aufweist. Wie praktisch alle älteren Vorschläge zur Gasbeseitigung in Akkumulatoren geht auch diese Druckschrift davon aus, daß eine Gasaufzehr nur in gasdicht verschlossenen Zellen und nur an elektrolytgetränkten, feuchten, aber nicht von flüssigen Elektrolyten überfluteten Elektroden möglich ist. Um solche Elektroden zu erhalten, wird der Elektrolyt üblicherweise in kapillaraktiven Separatoren festgelegt, wobei die Besonderheit darin liegt, daß der Separator ausgesparte elektrolytfreie Hohlräume (Kanäle) enthält. Der dadurch beträchtlich verringerte Elektrolytquerschnitt und die geringere verfügbare Elektrolytmenge im Plattenzwischenraum haben eine deutlich reduzierte Energie- und vor allem Leistungsdichte der Batterie zur Folge, die heutigen Anforderungen nicht genügt. Außerdem fehlen wirksame Maßnahmen gegen zu erwartende Berührungskurzschlüsse durch die Separatoröffnungen hindurch, obwohl feststeht, daß ohne Lösung dieses Problems keine funktionsfähigen Akkumulatoren herstellbar sind.

In der US-A 4 053 695 sind Separatoren dargestellt, die Teile größerer und geringerer Verdichtung aufweisen. Hier hat der Elektrolyt lediglich die Möglichkeit, parallel zu den Hauptflächen des Separators zu fließen, nicht aber quer zu dieser Richtung.

Bei den Akkumulatoren nach der FR-A 1 246 427 sind makroporöse Separatoren vorgesehen, die gasdurchlässig sind und den Elektrolyten festlegen. Gegen die positive Elektrode hin können die Separatoren mit einem Glasgewebe belegt sein, aber nicht, um Berührungskurzschlüsse zu vermeiden, sondern um die Oxidation der positiven Elektroden zu verhindern. Der hier beschriebene Separator hat also weder Teile, die gasundurchlässig sind, noch hat er Löcher, durch die ein flüssiger Elektrolyt ungehindert hindurchtreten kann, außerdem ist der Elektrolyt in Elektroden und Separatoren festgelegt.

### Vorteile der Erfindung

Der erfindungsgemäße gasungsfreie Akkumulator mit den kennzeichnenden Merkmalen des Hauptanspruchs hat demgegenüber den Vorteil, daß es auf sehr einfache Weise gelingt, die Gasung eines Akkumulators mit flüssigem saurem oder alkalischem Elektrolyten praktisch vollständig zu verhindern, ohne den üblichen Aufbau des Akkumulators wesentlich zu verändern. Von der speziellen Ausführung des Separators abgesehen, bestehen für die Anwendung keine weiteren funktionsbedingten Einschränkungen. Weder das Verhältnis der aktiven Massen noch die Konsistenz des Elektrolyten spielen dabei eine entscheidende Rolle, so daß auch Batterien, in denen aus Leistungsgründen flüssige Säure bzw. Lauge verwendet werden muß, in gasungsfreier Ausführung hergestellt werden können. Da der Sauerstoff hierbei auf direktem Wege und nicht, wie bei bekannten Lösungen, über den Gasraum zu den Minusplatten gelangt, sind ein gasdichter Zellenverschluß und Sicherheitseinrichtungen gegen Überdruck, wie druckempfindliche Schalter oder Ventile, nicht erforderlich.

Speziell bei wartungsfreien Bleiakkumulatoren mit antimonfreien Gittern bringt eine wirksame Reduktion des während der Ladung entstehenden Sauerstoffs an den Minusplatten noch einen anderen Vorteil: Der in der Regel gegenüber den Plusplatten bessere Ladewirkungsgrad der Minusplatten bewirkt nämlich, daß diese frühzeitiger aufgeladen sind. Eine vollständige Aufladung der Plusplatten ist nur bei genügend langer Ladung, d. h. Überladung der Minusplatten, mit konstantem Strom möglich. Mit konstanter Spannung oder auch Ladungen nach I/U- oder fallenden Kennlinien ist der Ladungsvorsprung der Minuselektroden praktisch nicht mehr aufzuholen, weil diese, sobald sie aufgeladen sind, infolge der hohen Wasserstoffüberspannung die Stromaufnahme der Batterie derart reduzieren, daß kaum noch Ladung aufgenommen wird. Die Folge sind unvollständig geladene Plusplatten, die die Batteriekapazität umso stärker begrenzen, je häufiger auf diese Weise geladen wurde, bis sich aufgrund des tieferen Ladezustands der Plusplatten die Wirkungsgrade angeglichen haben. Die Angleichung der Ladewirkungsgrade erfolgt bei konventionellen Akkumulatoren mit antimonhaltigen Gittern automatisch über die fortschreitende Antimonvergiftung der Minusplatten. Bei Akkumulatoren mit antimonfreien Gittern müssen dafür besondere Vorkehrungen getroffen werden, um vor allem auch von der für die Lebensdauer dieser Akkumulatoren schädlichen Plusbegrenzung der Kapazität wegzukommen. Bei den erfindungsgemäßen Akkumulatoren wird über die Sauerstoffreduktion an den Minusplatten eine Anpassung der unterschiedlichen Ladewirkungsgrade von Plus- und Minusplatten erreicht, die Voraussetzung ist für eine gleichmäßige Ausnutzung der Kapazität des Plattenmaterials.

Ein weiterer, im Falle des Bleiakkumulators durch die Erfindung erzielter Fortschritt ist, daß durch Kurzschlüsse bedingte Batterieausfälle, die eine sehr häufige Ausfallursache wartungsfreier Bleibatterien darstellen, praktisch ausgeschlossen werden, wodurch ihre Lebensdauer beträchtlich gesteigert werden kann. Ein wichtiger Grund für das verstärkte Auftreten von durch Mossing bzw. Dendriten verursachten Kurzschlüssen in wartungsfreien Bleibatterien ist offensichtlich das wegen der hohen Wasserstoffüberspannung sehr niedrige (negative) Minuselektrodenpotential, das gegen Ladungsende in ständig gleichbleibender Höhe an den Minusplatten anliegt und eine Bleiabscheidung zur Folge hat, die sich durch gerichtetes Wachstum zur anderen Polarität auszeichnet und hauptsächlich an exponierten Stellen hoher Stromdichte und Überspannung auftritt. Da es sich hierbei vor allem um Plattenkanten und -ecken handelt, stellen selbst reichlich überstehende Separatoren keinen wirksamen Schutz gegen Kurzschlüsse solcher Art dar. Dagegen wird, wie die Batterieversuche zeigten, bei Sauerstoffreduktion das Minuspotential so angehoben, daß eine zu Kurzschlüssen führende Bleiabscheidung nicht mehr stattfindet. Hauptsächlich dadurch gelang es, die augenblickliche Zyklenlebensdauer wartungsfreier Starterbatterien von etwa 90 Niederstromentladungen mehr als zu verdoppeln.

Durch die in den Unteransprüchen aufgeführten Maßnahmen sind vorteilhafte Weiterbildungen und Verbesserungen des im Hauptanspruch angegebenen Akkumulators möglich. Besonders vorteilhaft ist es, wenn das mikroporöse, gasundurchlässige Material aus mit Bindemittel zusammengehaltenem Kieselgur oder Silikagel, aus mikroporösen PVC- oder Polypropylenschichten oder aus phenolharzgetränktem Papier und das gasdurchlässige Gewebe oder Vlies aus Kunststoff oder Glas bestehen.

## Zeichnung

Ein Ausführungsbeispiel der Erfindung ist in der Zeichnung anhand eines Bleiakkumulators dargestellt und in der nachfolgenden Beschreibung näher erläutert. Es zeigt
Fig. 1 einen schematischen Schnitt durch eine einzelne Zelle,
Fig. 2 die Gasaufzehr in Prozent in Abhängigkeit vom Ladestrom und
Fig. 3 die Gasaufzehr in Prozent in Abhängigkeit von der Temperatur.

## Beschreibung des Ausführungsbeispiels

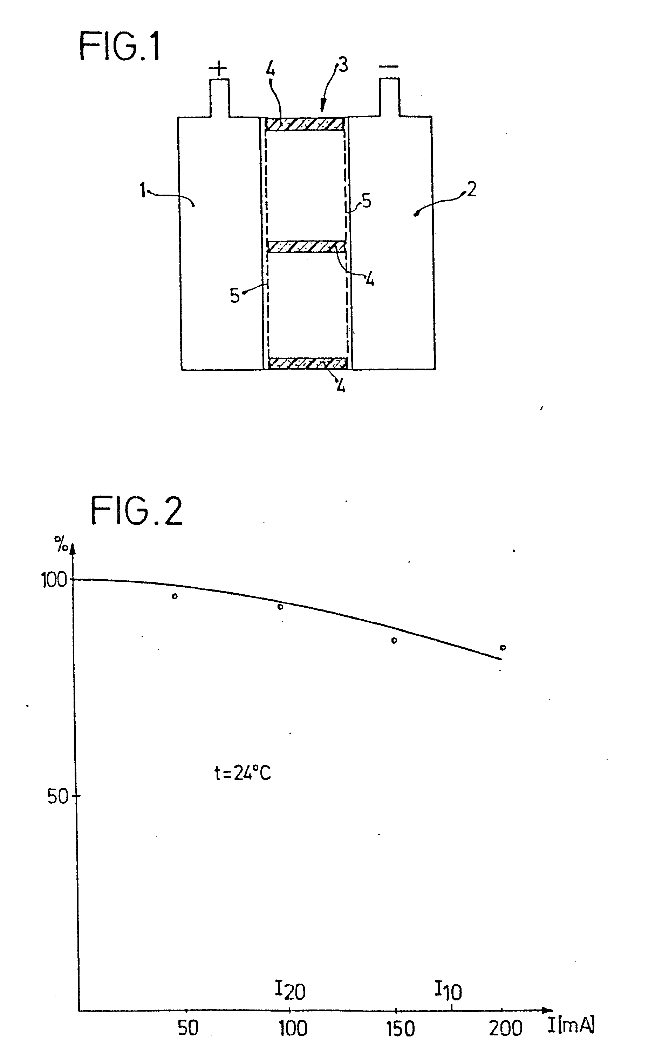

Die Zelle besteht aus einer positiven Bleidioxidelektrode 1, einer negativen Bleielektrode 2 sowie dem dazwischen befindlichen, gasdurchlässigen Separator 3. Elektroden und Separator tauchen in einen nicht dargestellten flüssigen Schwefelsäureelektrolyten ein. Der Separator besteht aus einem Rahmen aus einem mikroporösen Polypropylen-Fasermaterial, von dem in dem Schnitt der Fig. 1 nur die horizontalen Stege 4 dargestellt sind. Zur Vermeidung von Berührungskurzschlüssen sind auf beiden Seiten des Separators 3 weitmaschige, 0,1 bis 0,3 mm dicke Glasvliese 5 angebracht, welche den Sauerstofftransport nicht behindern.

Der bei der Ladung und Überladung der Zelle an der Anode 1 entstehende Sauerstoff gelangt teils in physikalisch gelöster Form durch Diffusion und teils in Gestalt kleinster Gasbläschen von ca. 50 bis 100 μm Durchmesser durch Konvektion direkt zur gegenüberliegenden Kathode 2, wo er reduziert und wieder zu Wasser umgesetzt wird. Der Separator muß deshalb so beschaffen und in der Batterie so angeordnet sein, daß der Transport des Sauerstoffs auf beiden Wegen unbehindert und möglichst verlustlos erfolgen kann, ein Entweichen des Sauerstoffs in den Gasraum durch den mikroporösen Rahmen also verhindert wird. Infolgedessen ist auch ein gasdichtes Verschließen der Batterien nicht notwendig. Um die Leitfähigkeit und die elektrochemischen Lade-Entladereaktionen nicht zu beeinträchtigen, sollten jedoch alle Bestandteile des Separators hinreichend elektrolytdurchlässig sein.

Bei Verwendung von Separatoren mit hohem Säurerückhaltvermögen ist es auch hier möglich, den Elektrolyten zwischen den Platten festzulegen und die Batterie lageunabhängig zu betreiben.

Handelsübliche mikroporöse Separatoren mit Porenweiten unter 50 μm sind für diesen Zweck wegen der nur geringen Durchlässigkeit für Sauerstoff nicht geeignet. Da in diesem Falle der Sauerstoff nur über den Gasraum nach erneuter Auflösung im Katholyten die von Säure bzw. Lauge überfluteten Minuselektroden erreichen kann, ist seine elektrochemische Umsetzung in Batterien mit flüssiger Säure bei Verwendung solcher Separatoren nicht möglich. Aus dem Elektrolyten herausstehende Minuselektroden verbessern zwar die Gasaufzehr, haben aber den

Nachteil, daß nicht mehr die gesamte Kapazität der Minusplatten zur Verfügung steht.

In Fig. 2 ist die Gasaufzehr in Abhängigkeit von Ladestrom bei Dauerüberladung von erfindungsgemäßen Bleibatterie-Zellen dargestellt, die mit einem durch Stege unterteilten Rahmenseparator ausgestattet waren. Es zeigt sich, daß bei einem Ladestrom $I_{20}$ etwa 95% des Sauerstoffs rekombiniert wird, während bei einem 10stündigen Ladestrom $I_{10}$ noch etwa 90% des Sauerstoffs umgesetzt wird, wobei diese Daten bei einer Temperatur von 24°C erhalten wurden.

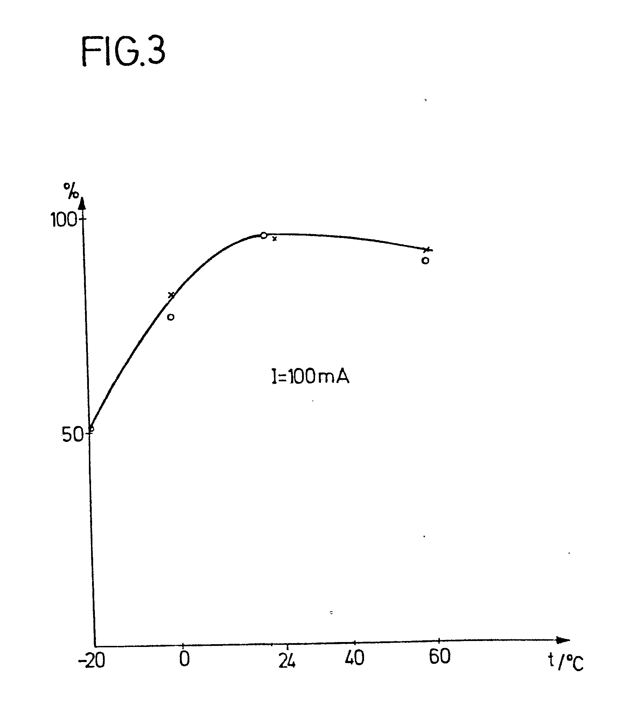

Fig. 3 zeigt die prozentuale Gasaufzehr in Abhängigkeit von der Temperatur bei einem Ladestrom von 100 mA. Bei einer Temperatur von −20°C werden immer noch 50% des Sauerstoffs rekombiniert, dieser Wert steigt dann mit steigender Temperatur stark an und erreicht bei ca. 24°C den maximalen Wert von etwa 95%, um bei höheren Temperaturen nur noch leicht abzufallen.

Diese Ergebnisse wurden größtenteils aus Gasmessungen an antimonfrei aufgebauten Batterie-Zellen gewonnen. Versuche mit Zellen, die antimonarme Gitterlegierungen mit Antimongehalten unter 3,5% enthielten, lieferten jedoch ganz ähnliche Ergebnisse.

## Patentansprüche

1. Gasungsfreier Akkumulator mit positiven und negativen Elektroden, die durch Separatoren voneinander getrennt sind, die aus einem mikroporösen, gasundurchlässigen, mit Löchern versehenen Material und einem gasdurchlässigen, weitmaschigen Gewebe oder Vlies bestehen, mit einem flüssigen sauren oder alkalischen Elektrolyten, dadurch gekennzeichnet, daß die Separatoren aus einem durch Stege unterteilten Rahmen aus einem mikroporösen, elektrolytdurchlässigen, gasundurchlässigen Material bestehen, wobei Rahmen und Stege 35 bis 65% der gesamten Separatorfläche ausmachen, und der Rahmen auf beiden Seiten, auch die vom Rahmen nicht ausgefüllten Flächen des Separators überdeckend, ein dünnes, weitmaschiges, gasdurchlässiges Gewebe oder Vlies aufweist.

2. Akkumulator nach Anspruch 1, dadurch gekennzeichnet, daß das mikroporöse, gasundurchlässige Material aus mit Bindemittel zusammengehaltenem Kieselgur oder Silikagel, aus mikroporösen PVC- oder Polypropylenschichten oder aus phenolharzgetränktem Papier besteht.

3. Akkumulator nach Anspruch 1, dadurch gekennzeichnet, daß das dünne, weitmaschige, gasdurchlässige Gewebe oder Vlies aus Kunststoff oder Glas besteht.

## Claims

1. Non-gassing accumulator comprising positive and negative electrodes which are separated from one another by separators and consist of a microporous, gas-impermeable material provided with holes and a gas-permeable, widemeshed fabric or fleece, and a liquid acid or alkaline electrolyte, characterised in that the separators consist of a frame, subdivided by webs, of a microporous, electrolyte-permeable, gas-impermeable material, the frame and webs accounting for 35 to 65% of the total separator surface, and the frame having a thin, widemeshed, gaspermeable fabric or fleece on both sides, the said fabric or fleece also covering the surfaces of the separator which are not filled by the frame.

2. Accumulator according to Claim 1, characterised in that the microporous, gas-impermeable material consists of kieselguhr or silica gel which is held together by a binder, of microporous PVC or polypropylene layers or of paper impregnated with phenolic resin.

3. Accumulator according to Claim 1, characterised in that the thin, wide-meshed, gaspermeable fabric or fleece consists of plastic or glass.

## Revendications

1. Accumulateur sans dégagement de gaz comportant des électrodes positives (1) et négatives (2) qui sont séparées les unes des autres par des séparateurs, qui sont constitués d'une matière microporeuse, imperméable aux gaz, pourvue de trous et d'un tissu ou d'une nappe non tissée à larges mailles (5), perméable aux gaz, avec un électrolyte liquide acide ou alcalin, accumulateur caractérisé en ce que les séparateurs sont constitués d'un cadre divisé par des traverses (4), fait d'une matière microporeuse, perméable à l'électrolyte, imperméable au gaz, le cadre et les traverses (4) représentant 35 à 65% de la surface totale du séparateur (3), le cadre présentant sur ses deux faces un tissu ou une nappe mince (5) perméable au gaz, recouvrant même les surfaces du séparateur (3) qui ne sont pas remplies par le cadre.

2. Accumulateur suivant la revendication 1, caractérisé en ce que la matière microporeuse imperméable au gaz est faite de kieselguhr ou de silicagel, rendus cohérents par un liant, de couches microporeuses de PVC ou de polypropylène, ou de papier imprégné de résine phénolique.

3. Accumulateur suivant la revendication 1, caractérisé en ce que le tissu, ou la nappe minces à larges mailles (5), perméables au gaz sont faits de matière plastique ou de verre.

# FIG.1

# FIG.2

FIG.3